(19)

Europäisches
Patentamt
European
Patent Office
Office européen
des brevets

(11) **EP 4 538 234 A1**

(12) **EUROPEAN PATENT APPLICATION**
published in accordance with Art. 153(4) EPC

(43) Date of publication:
**16.04.2025   Bulletin 2025/16**

(51) International Patent Classification (IPC):
**C01G 25/02** (2006.01)    **C04B 35/486** (2006.01)

(21) Application number: 23823918.0

(52) Cooperative Patent Classification (CPC):
**C01G 25/00; C01G 25/02; C04B 35/486**

(22) Date of filing: **13.06.2023**

(86) International application number:
**PCT/JP2023/021896**

(87) International publication number:
**WO 2023/243628 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **13.06.2022   JP 2022095300**

(71) Applicant: **Tosoh Corporation**
**Yamaguchi 746-8501 (JP)**

(72) Inventors:
• **FUKIAGE, Taku**
  **Shunan-shi Yamaguchi 746-8501 (JP)**

• **TSUCHIYA, Satoshi**
  **Shunan-shi Yamaguchi 746-8501 (JP)**
• **TSUKIMORI, Takashi**
  **Shunan-shi Yamaguchi 746-8501 (JP)**
• **HIGUCHI, Yuya**
  **Shunan-shi Yamaguchi 746-8501 (JP)**
• **NAGAYAMA, Hitoshi**
  **Shunan-shi Yamaguchi 746-8501 (JP)**

(74) Representative: **Müller-Boré & Partner**
**Patentanwälte PartG mbB**
**Friedenheimer Brücke 21**
**80639 München (DE)**

(54)    **SINTERED BODY**

(57)    At least one of a zirconia sintered body that contributes to the sustainable development goals (SDGs) and has high impact resistance and a method for producing the zirconia sintered body is provided. A zirconia sintered body comprising 4.5% by mole or more and 15.5% by mole or less of a stabilizing element other than yttrium, wherein the stabilizing element contains 0% by mole or more and 8.5% by mole or less of cerium, a cubic phase of zirconia is not contained, and a monoclinic phase ratio is 70% or less.

FIG. 1

EP 4 538 234 A1

## Description

### TECHNICAL FIELD

The present disclosure relates to a sintered body that contributes to SDGs and has high impact resistance.

### BACKGROUND ART

Ceramic materials are high-strength and chemically and thermally stable materials. In particular, in recent years, a sintered body containing zirconia with high esthetics as a matrix (hereinafter also referred to as a "zirconia sintered body") has been widely used as a structural material or a decorative material. In recent years, in addition to strength against a static load, such as bending strength, strength against a dynamic load, such as impact resistance, has also been required.

For example, Patent Document 1 discloses that a zirconia sintered body produced by mainly using cerium and yttrium as stabilizing elements at a sintering temperature of 1450°C to 1550°C exhibits high impact resistance.

Patent Document 2 reports that a cubic phase $Sr_xNbO_3$ is dispersed in zirconia to improve fracture toughness and drop resistance. In Examples described in Patent Document 2, however, zirconia containing 3% by mole of yttrium oxide as a stabilizing element is described, and the zirconia has a sintering temperature as high as 1450°C or more.

In general, a zirconia sintered body is produced by sintering a zirconia powder. To densify and increase the strength of a sintered body, the sintering temperature of zirconia containing yttrium is typically 1300°C or more or as high as more than 1500°C. However, sintering at such a high temperature consumes a large amount of energy, and the production of the energy discharges a large amount of carbon dioxide. The sustainable development goals (also referred to as "SDGs") set a target for reducing greenhouse gas emissions and require a decrease in the emission of a greenhouse gas carbon dioxide.

### PRIOR ART DOCUMENTS

### PATENT DOCUMENTS

Patent Document 1: JP-A-2021-091602
Patent Document 2: JP-T-2019-501855

### DISCLOSURE OF INVENTION

### TECHNICAL PROBLEM

The inventions described in Patent Documents 1 and 2 require sintering at a high temperature of 1450°C or more.

In contrast, in the present disclosure, it has been found that a sintered body produced even at a low sintering temperature of less than 1300°C has sufficiently high density and mechanical strength and high impact resistance, such as high ball drop strength, and is suitable as a structural material or a decorative material.

It is an object of the present disclosure to provide at least one of a zirconia sintered body that contributes to SDGs and has high impact resistance and a method for producing the zirconia sintered body.

### SOLUTION TO PROBLEM

The present invention is defined in the claims, and the gist of the present disclosure is as follows:

[1] A zirconia sintered body comprising 4.5% by mole or more and 15.5% by mole or less of a stabilizing element other than yttrium, wherein the stabilizing element contains 0% by mole or more and 8.5% by mole or less of cerium, a cubic phase of zirconia is not contained, and a monoclinic phase ratio is 70% or less.

[2] The sintered body according to [1], wherein the stabilizing element contains 2.5% by mole or more and 8.5% by mole or less of cerium.

[3] The sintered body according to [1] or [2], wherein in an X-ray diffraction pattern of the sintered body, an absolute $\Delta\theta$ $(004)_t$ of a shift amount from $2\theta = 73.0$ degrees of a diffraction angle of a diffraction line corresponding to a (004) plane of a tetragonal phase of zirconia is 0.3 degrees or more, and an absolute $\Delta\theta(400)_t$ of a shift amount from $2\theta = 74.2$ degrees of a diffraction angle of a diffraction line corresponding to a (400) plane of the tetragonal phase of zirconia is 0.1 degrees or less.

[4] The sintered body according to any one of [1] to [3], wherein the stabilizing element further contains magnesium or calcium.

[5] The sintered body according to any one of [1] to [4], wherein the stabilizing element contains magnesium.

[6] The sintered body according to any one of [1] to [5], wherein the sintered body has a measured density of 5.50 g/cm$^3$ or more and 6.30 g/cm$^3$ or less.

[7] The sintered body according to any one of [1] to [6], comprising a colorant.

[8] The sintered body according to any one of [1] to [7], comprising at least one metal element selected from the group consisting of Cr, Mn, Fe, Co and Ni in an amount of more than 0% by weight and 5% by weight or less.

[9] A zirconia powder comprising 4.5% by mole or more and 15.5% by mole or less of a stabilizing element other than yttrium, wherein the stabilizing element contains 2.5% by mole or more and 8.5% by mole or less of cerium.

[10] The powder according to [9], wherein the powder has a sinterable temperature of 1020°C or more and less than 1300°C.

[11] The powder according to [9] or [10], wherein the powder has a sinterable temperature of 1020°C or more and 1200°C or less.

[12] A method for producing a sintered body using the powder according to any one of [9] to [11].

[13] A member comprising the sintered body according to any one of [1] to [8].

BRIEF DESCRIPTION OF DRAWINGS

[Fig. 1] Fig. 1 is a schematic view of a ball drop test using a Du Pont ball drop tester.

[Fig. 2] Fig. 2 is a schematic view of an example of the center of impact (formation of a depressed portion) after a ball drop test.

[Fig. 3] Fig. 3 is a schematic view of an example of the vicinity of the center of impact in a known sintered body after the ball drop test.

[Fig. 4] Fig. 4 is a schematic view of an example of the arrangement of a sample in the ball drop test.

[Fig. 5] Fig. 5(a) is a schematic view of an example of a fracture in the ball drop test, and Fig. 5(b) is a schematic view of an example of no fracture in the ball drop test.

DESCRIPTION OF EMBODIMENTS

A sintered body according to the present disclosure is described in the following embodiments. The terms used in the present embodiments are described below. In the present description, the upper limit and the lower limit of the numerical value can be arbitrarily combined.

In the present embodiment, the "zirconia sintered body" refers to a sintered body containing zirconia as a matrix. The term "zirconia powder" refers to a powder composition containing more than 50% by mole of zirconia.

A preferred method for evaluating impact resistance may be a ball drop test of dropping a 300-g falling weight from a specified drop height at room temperature using a Du Pont ball drop tester according to JIS K 5600 5-3 (hereinafter also referred to simply as a "ball drop test").

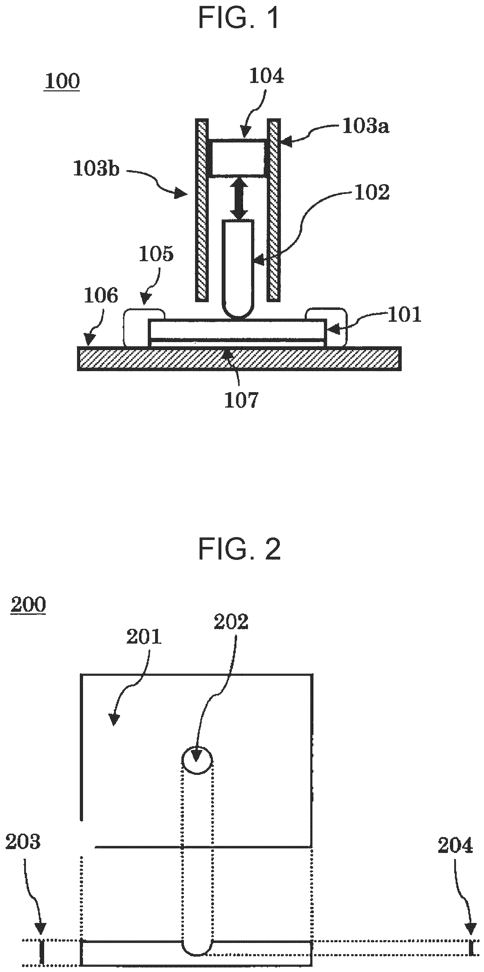

Fig. 1 is a schematic view of a ball drop test using a Du Pont ball drop tester. As illustrated in Fig. 1, in the ball drop test, a sample (101) is placed on a sample stage (106) of a cylindrical ball drop tester. A protective tape (107) is attached to the back surface of the sample (101). A fixing tape (105) is attached to the side surface of the sample (101). A falling weight is composed of a weight (104) and a die (punch: 102), and the die (102) is placed on the surface of the sample (101). The ball drop test may be performed by dropping the weight (104) from a height corresponding to the drop height from the die (the height indicated by the double-headed arrow in Fig. 1: 200 mm). The die (102) has a cylindrical shape with a spherical (hemispherical) tip. The weight (104) is dropped along guides (103a, 103b) of the Du Pont ball drop tester to apply a desired impact force to the sample (101) via the die (102).

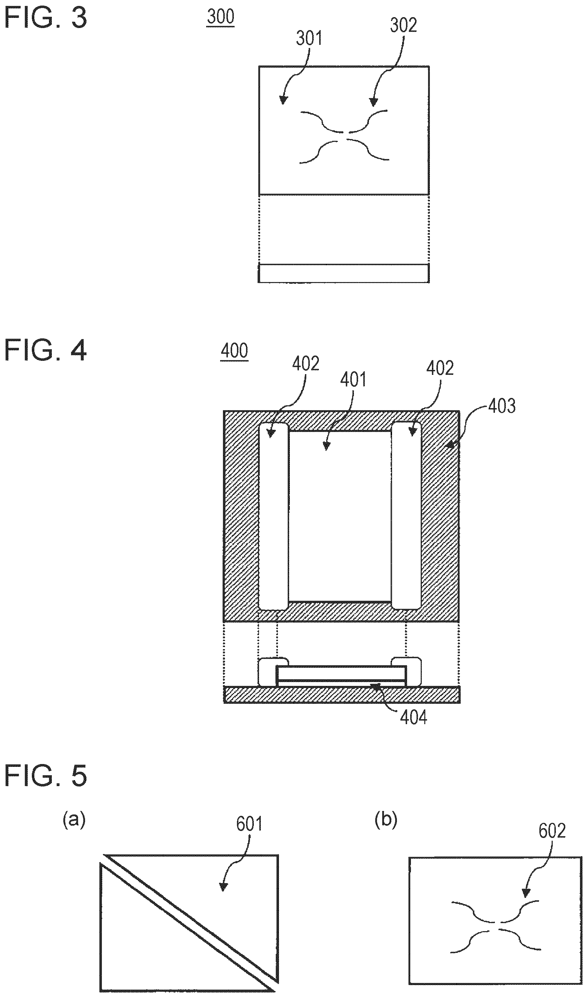

Fig. 2 is a schematic view of the appearance of a sintered body produced from a powder according to the present embodiment after the ball drop test. Fig. 2 shows that the sintered body produced from the powder according to the present embodiment has an impact mark in a region to which an impact force was applied with a falling weight (die) in the ball drop test (hereinafter also referred to as "the center of impact"). The impact mark in Fig. 2 is a depressed portion formed near the center of impact, and the plastic deformation region can be visually observed. Although not shown, a defect due to brittle fracture, such as a crack, may be present near the depressed portion. In contrast, Fig. 3 is a schematic view of the appearance of a known sintered body (301) after the ball drop test. As illustrated in Fig. 3, the known sintered body has no impact mark at the center of impact and has only a defect (302) due to brittle fracture, such as a crack.

The presence or absence of a plastic deformation region may be determined by visual observation and/or by observation with an optical microscope, or by visual observation. The magnification for observation with an optical microscope may range from 1 to 100 times, preferably 10 to 50 times.

Although not shown, a known sintered body with high fracture toughness has no change in appearance in the ball drop test and has no impact mark. In contrast, a sintered body with a plastic deformation region has plastic deformation before brittle fracture. Thus, if no impact mark is observed, the presence or absence of a plastic deformation region may also be determined by repeatedly performing a ball drop test while increasing the drop height until an impact mark can be observed and checking for an impact mark, such as a depressed portion.

To determine the presence or absence of a plastic deformation region with impact resistance acceptable to decorative parts, such as exterior materials of clocks and watches and portable electronic devices, the presence or absence of the plastic deformation region is preferably determined in the present embodiment by dropping a 300-g falling weight from a specified drop height in a ball drop test.

The ball drop test in the present embodiment can be performed at room temperature (20°C to 30°C) using a Du Pont ball drop tester according to JIS K 5600 5-3. The ball drop test may be performed under the following conditions.

Falling weight: (shape) a cylindrical die with a spherical tip 6.35 mm in radius

(mass) 300 g

Drop height: 150 mm

Sample: a plate-like sintered body 40 mm in length x 30 mm in width x 2 mm in thickness with a surface roughness Ra of 0.02 μm or less on both surfaces

The sample (401) is mounted by fixing a surface (a main surface 40 mm in length x 30 mm in width) of the sample to the sample stage (403) of the ball drop tester with a double-sided tape (protective tape) (404) to prevent scattering of pieces of the sample. A fixing tape (402) is attached to a main surface of the sample opposite to the fixed surface in the longitudinal direction of the main surface to fix the sample (Fig. 4). The ball drop test may be performed on the fixed sample.

The depth of an impact mark formed in the ball drop test, for example, the maximum depth [mm] of the impact mark (204) may be more than 0% and 3.5% or less or 0.5% or more and 3% or less of the thickness [mm] of the sintered body (203) in Fig. 2. The depth (204) of the impact mark (depressed portion) in Fig. 2 is emphasized.

The sintered body according to the present embodiment is described below.

The sintered body according to the present embodiment is a zirconia sintered body comprising 4.5% by mole or more and 15.5% by mole or less of a stabilizing element other than yttrium, wherein the stabilizing element contains 0% by mole or more and 8.5% by mole or less of cerium, a cubic phase of zirconia is not contained, and a monoclinic phase ratio is 70% or less.

The sintered body according to the present embodiment contains 4.5% by mole or more and 15.5% by mole or less of a stabilizing element other than yttrium on an oxide basis (that is, the amount of a stabilizing element other than yttrium is 4.5% by mole or more and 15.5% by mole or less on an oxide basis). The sintered body according to the present embodiment contains zirconia containing a stabilizing element, the zirconia being composed mainly of monoclinic zirconia. It is difficult to produce a sintered body containing tetragonal zirconia, which is responsible for fracture toughness, by sintering a zirconia containing no stabilizing element. The sintered body according to the present embodiment is a ceramic sintered body and is a so-called zirconia sintered body composed mainly of zirconia.

The stabilizing element is an element for stabilizing zirconia and may be an alkaline-earth metal or a rare-earth element. The sintered body according to the present embodiment contains, as a stabilizing element, at least one stabilizing element other than yttrium. The stabilizing element is preferably only an element other than yttrium, that is, free of yttrium. Yttrium is a rare element called a rare metal, and the supply of yttrium becomes a problem as zirconia becomes widespread. In the SDGs, "achieve sustainable management and efficient use of natural resources by 2030" is set as a target, and sustainable resource use is required for material development. Thus, the absence of yttrium contributes to sustainable resource use as defined by SDGs.

The stabilizing element preferably contains at least one selected from the group consisting of cerium, magnesium and calcium. The stabilizing element preferably contains cerium to improve the toughness of the sintered body according to the present embodiment and magnesium or calcium to improve the low-temperature sinterability of the sintered body according to the present embodiment.

The zirconia sintered body according to the present embodiment may contain two or more stabilizing elements other than yttrium and more preferably contains cerium and one or more stabilizing elements other than cerium and yttrium. For example, the zirconia contained in the sintered body according to the present embodiment preferably contains cerium and magnesium, or cerium and calcium, to improve the low-temperature sinterability.

The stabilizing element content (hereinafter also referred to as the "amount of stabilizing element") may be such that the zirconia is partially stabilized. The amount of stabilizing element is 4.5% by mole or more and 15.5% by mole or less on an oxide basis. The amount of stabilizing element is more preferably 6% by mole or more and 15.5% by mole or less, 6% by mole or more and 14% by mole or less, 6% by mole or more and 12% by mole or less, 7% by mole or more and 12% by mole or less, 8% by mole or more and 12% by mole or less or 8% by mole or more and 10% by mole or less.

In the present embodiment, the amount of stabilizing element is the ratio (% by mole) of the total of stabilizing elements on an oxide basis to the total of zirconia and stabilizing elements on an oxide basis. For example, the amount of stabilizing element in a sintered body containing zirconia containing cerium and magnesium or in a cerium and magnesium stabilized zirconia powder can be determined as $\{(CeO_2 + MgO)/(CeO_2 + MgO + ZrO_2)\} \times 100$ (% by mole), wherein cerium is converted into its oxide $CeO_2$ and magnesium is converted into its oxide $MgO$.

In the present disclosure, to convert a stabilizing element into its oxide, cerium may be converted into $CeO_2$, magnesium may be converted into $MgO$, and calcium may be converted into $CaO$.

The sintered body according to the present embodiment may satisfy the amount of stabilizing element and, in the present embodiment, the cerium content is 0% by mole or more and 8.5% by mole or less, preferably more than 0% by mole and 8.5% by mole or less, more preferably 2.5% by mole or more and 8.5% by mole or less. Thus, the sintered body according to the present embodiment may be a sintered body in which the amount of the stabilizing element other than yttrium is 4.5% by mole or more and 15.5% by mole or less on an oxide basis and the stabilizing element does not contain at least cerium. Alternatively, the amount of the stabilizing element other than yttrium may be 4.5% by mole or more and 15.5% by mole or less on an oxide basis, the stabilizing element may contain at least cerium, and the cerium content may be more than 0% by mole and 8.5% by mole or less. At a cerium content of more than 8.5% by mole, a cubic phase is likely to be formed, and desired mechanical characteristics are difficult to achieve. The amount of stabilizing element other than cerium is preferably 0% by mole or more and 12% by mole or less, more preferably 0% by mole or more and 10% by mole or less, 1% by mole or more and 10% by mole or less or 1.5% by mole or more and 10% by mole or less, preferably 2% by mole or more and 9% by mole or less, 2% by mole or more and 7% by mole or less or 5% by mole or more and 7% by mole or less.

Each stabilizing element content in the present embodiment is the ratio (% by mole) of each stabilizing element on an oxide basis to the total of zirconia and stabilizing elements on an oxide basis.

The stabilizing element is preferably solid-dissolved in zirconia, and the powder according to the present embodiment preferably contains no undissolved stabilizing element. In the sintered body according to the present embodiment, when the powder X-ray diffraction pattern does not have a peak of at least one compound of an oxide of a stabilizing element and a composite oxide of a plurality of metal elements including a stabilizing element, the sintered body may be regarded as not containing an undissolved stabilizing element.

The sintered body according to the present embodiment may contain a component derived from an additive agent. The component derived from an additive agent may be a pigment component. Thus, the sintered body according to the present embodiment exhibits a color tone different from the original color tone of zirconia and has improved mechanical characteristics. The additive agent in the present embodiment may be an additive agent containing at least one of an element with a function of coloring zirconia and a compound thereof or an additive agent containing at least one of an element with a function of changing the mechanical strength or transparency/translucency of zirconia and a compound thereof.

The element with the function of changing the mechanical strength or transparency/translucency of zirconia is, for example, aluminum (Al) or titanium (Ti). The element with the function of coloring zirconia is preferably, for example, a metal element or a transition metal element. A specific additive agent is more preferably at least one selected from the group consisting of titanium (Ti), vanadium (V), chromium (Cr), manganese (Mn), iron (Fe), cobalt (Co), nickel (Ni), copper (Cu) and zinc (Zn), still more preferably at least one selected from the group consisting of chromium, iron, cobalt, manganese and nickel. As Ti has a function of changing the mechanical strength and transparency/translucency of zirconia and a function of coloring zirconia, an element contained in the additive agent may have a plurality of functions of changing the physical properties and characteristics of zirconia. In other words, the additive agent may contain an element with a plurality of functions of changing the physical properties and characteristics of zirconia.

The additive agent in the sintered body according to the present embodiment may contain a metal oxide with a perovskite structure or a spinel structure and is preferably a transition metal oxide with a perovskite structure or a spinel structure.

A metal oxide with a perovskite structure may be an oxide represented by $ABO_3$, wherein A denotes at least one selected from the group consisting of calcium, strontium (Sr), barium (Ba) and bismuth (Bi), and B denotes at least one selected from the group consisting of vanadium, chromium, manganese, iron, cobalt, nickel and aluminum (Al).

A metal oxide with a spinel structure may be an oxide represented by $AB_2O_4$, wherein A and B independently denote at least one selected from the group consisting of calcium, strontium, barium, bismuth, vanadium, chromium, manganese, iron, cobalt, nickel and aluminum, preferably an oxide represented by $AB_2O_4$. A specific metal oxide with the spinel structure may be at least one selected from the group consisting of $CoAl_2O_4$, $Fe_3O_4$ and $Mn_3O_4$ (that is, $Fe^{2+}Fe^{3+}_2O_4$ and $Mn^{2+}Mn^{3+}_2O_4$), preferably at least one of $CoAl_2O_4$ and $Mn_3O_4$.

In the sintered body according to the present embodiment, as the additive agent content decreases, the impact resistance is easily improved. The sintered body according to the present embodiment may not contain an additive agent (the additive agent content may be 0% by mass). On the other hand, preferably, the sintered body according to the present embodiment contains an additive agent, and the additive agent content is more than 0% by mass or 0.001% by mass or more. Although the additive agent content is arbitrary, the upper limit of the additive agent content is, for example, 5% by mass or less, less than 3% by mass, 2.5% by mass or less, 2.0% by mass or less, 1.5% by mass or less, 1.0% by mass or less or 0.7% by mass or less. The additive agent content can be determined as the ratio of the total mass of additive agents on an oxide basis to the mass of the sintered body according to the present embodiment. The additive agents on an oxide basis in the present embodiment are, for example, $CrO_2$ for chromium, $CoO$ for cobalt, $Fe_2O_3$ for iron, $MnO_2$ for manganese, $ZnO$ for zinc and $NiO$ for nickel. These elements do not necessarily have their oxides and the oxidation number for forming the oxides in the sintered body.

The sintered body according to the present embodiment may contain alumina ($AL_2O_3$) as an additive agent. The alumina content of the sintered body according to the present embodiment may be more than 0% by mass and less than 5% by mass. From the perspective of improving impact resistance, alumina is preferably not contained (the alumina content is 0% by mass). The alumina content may be determined as the mass ratio of aluminum in terms of $Al_2O_3$ to the total of zirconia, stabilizing elements on an oxide basis and aluminum in terms of $Al_2O_3$. The alumina content of a sintered body containing a pigment M can be determined as the mass ratio of aluminum in terms of $Al_2O_3$ to the total of zirconia, stabilizing elements on an oxide basis, a pigment $M_xO_y$ on an oxide basis and aluminum in terms of $Al_2O_3$.

The sintered body according to the present embodiment may contain an additive agent, such as silica ($SiO_2$), titania ($TiO_2$), gallium oxide ($Ga_2O_3$) or germanium oxide ($GeO_2$), in addition to alumina. Containing such an additive agent, the sintered body can have desired mechanical characteristics.

Although the sintered body according to the present embodiment may contain incidental impurities, such as hafnia ($HfO_2$), the sintered body preferably does not contain materials other than stabilizing elements, zirconia, alumina, an optional additive agent and incidental impurities. In the present embodiment, each component content of the sintered body can be calculated by regarding hafnia ($HfO_2$) as zirconia ($ZrO_2$).

For example, when the sintered body according to the present embodiment is a zirconia sintered body containing, as a pigment component, a composite oxide represented by $ABO_3$ or $AB_2O_4$, alumina, silica and, as stabilizing elements, magnesium and cerium, each component content may be determined as described below. In the following formula, the mass of $HfO_2$ is assumed to be included in the $ZrO_2$ term.

Amount of pigment component [% by mass] = $\{(ABO_3 + AB_2O_4)/(MgO + Ce_2O + ZrO_2 + Al_2O_3 + SiO_2 + ABO_3 + AB_2O_4)\} \times 100$

Amount of alumina [% by mass] = $\{Al_2O_3/(MgO + Ce_2O + ZrO_2 + Al_2O_3 + SiO_2 + ABO_3 + AB_2O_4)\} \times 100$

Amount of silica [% by mass] = $\{SiO_2/(MgO + Ce_2O + ZrO_2 + Al_2O_3 + SiO_2 + ABO_3 + AB_2O_4)\} \times 100$

Amount of stabilizing element [% by mole] = $\{(MgO + Ce_2O)/(MgO + Ce_2O + ZrO_2)\} \times 100$

Amount of magnesium [% by mole] = $\{(MgO)/(MgO + Ce_2O + ZrO_2)\} \times 100$

Amount of cerium [% by mole] = $\{(Ce_2O)/(MgO + Ce_2O + ZrO_2)\} \times 100$

The sintered body according to the present embodiment can be used as a precursor of a calcined body or a sintered body and is suitable as a raw material powder for members required to have relatively high impact resistance, such as covers for accessories, such as ornaments, clocks and watches and housings, and exterior members for portable electronic devices, such as mobile phones.

The sintered body according to the present embodiment preferably has a high density, and the density measured by the following method may be 5.50 $g/cm^3$ or more, 5.60 $g/cm^3$ or more, 5.70 $g/cm^3$ or more or 5.80 $g/cm^3$ or more, and less than 6.50 $g/cm^3$, 6.40 $g/cm^3$ or less, 6.30 $g/cm^3$ or less or 6.20 $g/cm^3$ or less, preferably 5.50 $g/cm^3$ or more and less than 6.50 $g/cm^3$, 5.70 $g/cm^3$ or more and 6.40 $g/cm^3$ or less or 5.80 $g/cm^3$ or more and 6.20 $g/cm^3$ or less. The sintered body with a density in this range is unlikely to have a high monoclinic phase ratio and is likely to have improved strength.

In the present embodiment, the measured density can be determined using a method according to JIS R 1634 (so-called Archimedes' principle) and is the mass determined by mass measurement relative to the volume determined using the Archimedes' principle.

The crystalline phase of zirconia of the sintered body according to the present embodiment preferably does not contain a cubic phase but contains at least a tetragonal phase and may be composed of a tetragonal phase and a monoclinic phase.

In the present embodiment, an X-ray diffraction (hereinafter also referred to as an "XRD") of a sintered body can be measured with a typical crystallinity analysis X-ray diffractometer (for example, apparatus name: Ultima IV, manufactured by RIGAKU).

The measurement conditions may be as follows:

Radiation source: CuK$\alpha$ radiation ($\lambda$ = 1.5418 angstroms)
Tube voltage: 45 kV
Tube current: 40 mA
Measurement mode: continuous scanning
Scanning speed: 4 degrees/min
Step width: 0.02 degrees
Measurement range: 2$\theta$ = 20 to 80 degrees
Goniometer: radius 185 mm

The sintered body according to the present embodiment does not contain a cubic phase of zirconia. The phrase "not contain a cubic phase of zirconia" means that, in the X-ray diffractometry, the ratio A/B of the intensity of a diffraction line corresponding to a (400) plane of the cubic phase at 2$\theta$ = 73.8 degrees (hereinafter also referred to as a "diffraction line A") to the intensity of a diffraction line corresponding to a (004) plane of tetragonal zirconia at 2$\theta$ = 74.2 degrees (hereinafter also referred to as a "diffraction line B") is 0.05 or less.

(Monoclinic Phase Ratio)

The sintered body according to the present embodiment has a monoclinic phase ratio of 70% or less, for example, 65% or less or 50% or less. This improves the dynamic strength of the sintered body, that is, the ball drop strength described later. The monoclinic phase ratio may be 0% or more, 10% or more, 20% or more or 30% or more, preferably 0% or more and 70% or less, 20% or more and 65% or less or 30% or more and 50% or less. The monoclinic phase ratio is calculated as described below.

In the XRD measurement, it is calculated using the following formula from a diffraction intensity $I(111)_{t,c}$ of a diffraction line near 2$\theta$ = 30.0 degrees corresponding to a (111) plane of tetragonal zirconia and cubic zirconia, a diffraction intensity $I(11\text{-}1)_m$ of a diffraction line near 2$\theta$ = 28 degrees corresponding to a (11-1) plane of monoclinic zirconia and a diffraction intensity $I(111)_m$ of a diffraction line near 2$\theta$ = 31.0 degrees corresponding to a (111) plane of monoclinic zirconia.

$$\text{Monoclinic phase ratio (\%)} = \{I(11\text{-}1)_m + I(111)_m\}/[\{I(11\text{-}1)_m + I(111)_m\} + I(111)_{t,c}] \times 100$$

(Peak Shift Amount)

In the XRD measurement, tetragonal zirconia has the diffraction line B and a diffraction line corresponding to the (004) plane of tetragonal zirconia at 2$\theta$ = 74.2 degrees (hereinafter also referred to as a "diffraction line C"). In the zirconia sintered body according to the present embodiment, the solid solution of the stabilizing element shifts the diffraction angles of these diffraction lines from the position of the 2$\theta$ described above. The absolute $\Delta\theta(400)_t$ and $\Delta\theta(004)_t$ of the shift amounts of the diffraction lines B and C are calculated as follows:

$$\Delta\theta(400)_t = [\text{absolute value of } \{(2\theta \text{ of measured diffraction line B}) \text{ degrees - 73.0 degrees}\}]$$

$$\Delta\theta(004)_t = [\text{absolute value of } \{(2\theta \text{ of measured diffraction line C}) \text{ degrees - 74.2 degrees}\}]$$

The zirconia sintered body according to the present embodiment preferably has a $\Delta\theta(400)_t$ of 0.2 degrees or more, more preferably 0.3 degrees or more. Furthermore, the zirconia sintered body according to the present embodiment preferably has a $\Delta\theta(004)_t$ of 0.15 degrees or less, more preferably 0.1 degrees or less. The sintered body according to the present embodiment exhibits such a peak shift, does not contain yttrium, can be sintered at a low temperature and has high toughness and impact resistance. The value of $\theta(400)_t$ can be, for example, 1.0 degrees or less or 0.8 degrees or less, and the value of $\theta(004)_t$ can be, for example, 0 degrees or more or 0.01 degrees or more. The value of $\theta(400)_t$ is preferably 0.2 degrees or more and 1.0 degrees or less or 0.3 degrees or more and 0.8 degrees or less, and the value of $\theta(004)_t$ is preferably 0 degrees or more and 0.15 degrees or less or 0.01 degrees or more and 0.1 degrees or less.

The shape of the sintered body according to the present embodiment may be at least one selected from the group consisting of spherical, approximately spherical, elliptical, discoidal, cylindrical, cubic, rectangular parallelepiped, polyhedral and approximately polyhedral. Furthermore, any shape may be used to achieve the desired purpose for various applications.

The sintered body according to the present embodiment preferably has a ball drop fracture energy (hereinafter also referred to as "ball drop strength") of 0.4 J or more or 0.5 J or more. The ball drop strength is a measure of impact resistance, and a higher ball drop strength indicates higher impact resistance. The sintered body has a ball drop strength of, for example, 10 J or less, 5 J or less, 2 J or less or 1 J or less. The ball drop strength may be 0.4 J or more and 10 J or less, 0.4 J or more and 5 J or less, 0.5 J or more and 2 J or less or 0.5 J or more and 1 J or less.

Ball drop strength (J) = mass of falling weight (g) x drop height (mm) x gravity acceleration (m/s$^2$) x $10^6$

The gravity acceleration may be 9.8 m/s$^2$.

The ball drop strength can be measured by the same method as in the ball drop test except that the drop height is the following height.

Drop height: 50 to 500 mm

Fracture can be identified from a sample broken into two or more pieces (Fig. 5(a)). On the other hand, a crack that does not extend from one end to the other end (Fig. 5(b)) indicates no fracture. In the case of no fracture at a specific drop height in the ball drop test, visual observation may be continued in the same manner in the ball drop test while increasing the drop height to 500 mm in increments of a constant height (for example, 50 mm) until fracture occurs. Alternatively, the ball drop test may be continued with different falling weights instead of different drop heights. For example, in the case of no fracture even at a drop height of 500 mm, a higher ball drop strength can be measured by increasing the mass of the falling weight from 300 g to 500 g and performing the ball drop test again at a drop height of 500 mm.

The sintered body according to the present embodiment can be applied to known sintered bodies, particularly zirconia sintered bodies, such as structural materials, optical materials, and dental materials, and can be used as members requiring relatively high impact resistance, such as covers for ornaments, clocks and watches, cases and other accessories, and exterior members for portable electronic devices, such as mobile phones.

A method for producing the sintered body according to the present embodiment is described below.

The sintered body according to the present embodiment may be produced by any method, provided that the resulting sintered body satisfies the above requirements. An example of the method for producing the sintered body according to the present embodiment may be a production method including the step of sintering a green body containing a stabilizing element source and zirconia.

The green body to be subjected to the above step (hereinafter also referred to as the "sintering step") is a green body (green compact) containing the stabilizing element source and zirconia. The green body may be any green body that can form the sintered body according to the present embodiment and only needs to have the same composition as that of a desired sintered body.

The stabilizing element source may be a compound containing a stabilizing element other than yttrium and may be an alkaline-earth metal, a rare-earth element or a compound containing at least one of an alkaline-earth metal and a rare-earth element as a precursor thereof. The stabilizing element source is preferably a compound containing at least one selected from the group consisting of cerium, magnesium and calcium.

The stabilizing element source content of the green body may be the same as the amount of stabilizing element of the desired sintered body.

The green body may contain an alumina source. The alumina source is at least one of alumina ($Al_2O_3$) and a compound containing aluminum (Al) serving as a precursor of alumina, for example, at least one selected from the group consisting of aluminum chloride, aluminum sulfate, aluminum nitrate, aluminum hydroxide and alumina, preferably alumina.

The alumina source content of the green body may be the same as the alumina content of the desired sintered body.

The green body may contain a binder to improve shape stability. The binder may be an organic binder used to form ceramics, for example, at least one selected from the group consisting of acrylic resins, polyolefin resins, waxes and plasticizers. The binder content may be 25 volume % or more and 65 volume % or less of the green body. In the present embodiment, "volume %" is synonymous with "% by volume". Furthermore, the binder constitutes, for example, more than 0% by mass and 10% by mass or less of 100% by mass of the green body.

The green body may have any shape depending on the purpose in consideration of shrinkage due to sintering, for example, at least one selected from the group consisting of spherical, approximately spherical, elliptical, discoidal, cylindrical, cubic, rectangular parallelepiped, polyhedral and approximately polyhedral.

The green body may be produced by any method, for example, by forming a mixture (hereinafter also referred to as a "raw material composition") of zirconium, a stabilizing element source and optionally an additive agent (for example, at least one of a pigment source and an alumina source) mixed by any method. Zirconia containing the stabilizing element may be used instead of or in addition to the zirconia and the stabilizing element source. The raw material composition to be used for the production of the green body may have the same composition as that of the intended green body and is, for example, a zirconia powder containing 4.5% by mole or more and 15.5% by mole of a stabilizing element other than yttrium and 2.5% by mole or more and 8.5% by mole or less of cerium in the stabilizing element. The powder can be used in a method for producing a sintered body using the powder, preferably in the method for producing the sintered body according to the present embodiment using the powder.

When zirconia containing the stabilizing element is used as the zirconia, the stabilizing element may be added to the zirconia by any method. For example, an example of a method for producing a zirconia powder containing 4.5% by mole or more and 15.5% by mole of a stabilizing element other than yttrium in the present embodiment and 2.5% by mole or more and 8.5% by mole or less of cerium in the stabilizing element is a method of mixing a hydrous zirconia sol with a stabilizing element source with a desired stabilizing element content, drying and calcining the mixture and washing the mixture with water.

The zirconia powder thus produced may be subjected to a grinding step. Any grinding method may be chosen. At least one of wet grinding and dry grinding may be chosen, and wet grinding is preferred. Specific wet grinding may be at least one selected from the group consisting of a ball mill, a vibrating mill and a continuous medium stirring mill and is preferably a ball mill.

Under grinding conditions for a ball mill, for example, a calcined powder and a solvent are mixed together to prepare a slurry in which the mass ratio of the calcined powder to the slurry is 30% by mass or more and 60% by mass or less, and the slurry is ground for 10 hours or more and 100 hours or less using zirconia balls with a diameter of 1 mm or more and 15 mm or less as a grinding medium.

Wet grinding may be followed by drying by any method to produce a powder of the present embodiment. The drying conditions may be 110°C to 130°C in the atmosphere.

To improve the operability of the powder, a method for producing the powder according to the present embodiment may include the step of granulating the powder (hereinafter also referred to as a "granulation step"). Granulation may be performed by any method. For example, a slurry of a mixture of the powder and a solvent is granulated by spraying. The solvent is at least one of water and an alcohol, preferably water. The granulated powder (hereinafter also referred to as "powder granules") may have an average granule size of 30 $\mu$m or more and 80 $\mu$m or less or 50 $\mu$m or more and 60 $\mu$m or less and a bulk density of 1.00 g/cm$^3$ or more and 1.50 g/cm$^3$ or less or 1.10 g/cm$^3$ or more and 1.45 g/cm$^3$ or less.

The green body and powder may contain an additive agent, that is, a pigment source, as required. The pigment source may be at least one of a pigment and a precursor thereof. The precursor of the pigment may be a compound containing an element with the function of coloring zirconia, preferably a compound containing a metal element, for example, at least one selected from the group consisting of oxides, hydroxides, oxyhydroxides, carbonates, oxalates, sulfates, acetates, nitrates, chlorides, fluorides, bromides and iodides of metals, preferably at least one selected from the group consisting of oxides, hydroxides, oxyhydroxides and carbonates of metals. A specific pigment and a precursor thereof may be at least one selected from the group consisting of chromium oxide, zinc oxide, nickel oxide, manganese oxide, iron oxide and cobalt oxide.

When the pigment is a composite metal oxide containing transition metals A and B and having a perovskite structure or a spinel structure, the pigment can be produced, for example, by mixing, as required, one or more selected from the group consisting of oxides, hydroxides, oxyhydroxides, carbonates, oxalates, sulfates, acetates, nitrates, chlorides, fluorides, bromides and iodides of each of the transition metals A and B constituting the composite metal oxide and firing the mixture in an air atmosphere at 1200°C to 1500°C.

The pigment source may be a commercially available pigment source, preferably one or more selected from the group consisting of CoAl$_2$O$_4$, Fe$_2$O$_3$ and ZnO, or CoAl$_2$O$_4$, Fe$_2$O$_3$ or ZnO.

The forming method may be a known forming method for forming a mixed powder into a green compact, preferably at least one selected from the group consisting of uniaxial pressing, isostatic pressing, injection molding, extrusion, tumbling granulation and slip casting, more preferably at least one of uniaxial pressing and isostatic pressing, still more preferably at least one of cold isostatic pressing and uniaxial pressing (powder press forming).

Before being sintered, the green body may be subjected to a calcination step to produce a calcined body. In the calcination step, the green body may be heat-treated at a temperature lower than the sintering temperature of the powder, for example, at a temperature of 800°C or more and less than 1020°C in the atmosphere.

In the sintering step, the green body is sintered to form a sintered body. The sintering method may be any sintering method, for example, a known sintering method, such as pressureless sintering, pressure sintering or vacuum sintering. A preferred sintering method may be pressureless sintering, and the sintering method is preferably pressureless sintering alone. Thus, the sintered body according to the present embodiment can be produced as a pressureless sintered body. Pressureless sintering is a method of sintering a green body (or a calcined body) by simple heating without applying an external force to the green body. The sintering atmosphere and temperature are not particularly limited. For example, pressureless sintering in the atmosphere at a sintering temperature of 1020°C or more or 1100°C or more and less than 1300°C, 1250°C or less or 1200°C or less may be mentioned. A sintering temperature of less than 1300°C results in a decrease in the energy required for sintering and a decrease in the amount of carbon dioxide discharged due to the production of the energy.

The zirconia powder of the present embodiment or a green body (green compact) thereof preferably has a sinterable temperature of 1020°C or more or 1100°C or more and less than 1300°C, 1250°C or less or 1200°C or less. The sinterable temperature is preferably 1020°C or more and less than 1300°C, 1020°C or more and 1250°C or less, 1100°C or more and 1250°C or less or 1100°C or more and 1200°C or less.

The sinterable temperature refers to a sintering temperature at which the powder can be sintered, and the phrase "the powder can be sintered" means that when the powder is sintered according to a sintering profile in which the temperature is held at a sintering temperature (also referred to as a "holding temperature"), which is the maximum temperature in the sintering step, the resulting sintered body has a measured density of 5.50 $g/cm^3$ or more and has no fissures or cracks. More specifically, for example, a powder can be sintered at 1200°C when the powder can be sintered in the atmosphere, by pressureless sintering, at a heating rate of 100°C/h, at a holding temperature of 1200°C, for a holding time of 2 hours and at a cooling rate of 200°C/h to produce a sintered body with a measured density of 5.50 $g/cm^3$ or more and with no fissures or cracks.

The details of the sintering atmosphere, the sintering method and the sintering profile are not particularly limited as long as the sintered body according to the present embodiment can be produced, and the following conditions are exemplified.

Sintering atmosphere: oxidizing atmosphere
Sintering method: pressureless sintering
Heating rate: 20°C/h to 700°C/h
Holding temperature: 1020°C or more and less than 1300°C
Holding time: 1 minute or more and 20 hours or less
Cooling rate: 20°C/h to 1000°C/h

EXAMPLES

The present embodiment is more specifically described in the following examples. However, the present embodiment is not limited to these examples.

(X-Ray Diffraction Peaks)

Using a typical X-ray diffractometer (apparatus name: Ultima IV, manufactured by Rigaku Corporation), XRD measurement was performed on a sintered surface of a sintered body sample to obtain an XRD pattern. The XRD measurement conditions are as follows:

Radiation source: CuK$\alpha$ radiation ($\lambda$ = 1.5418 angstroms)
Tube voltage: 45 kV
Tube current: 40 mA
Measurement mode: continuous scanning
Scanning speed: 4 degrees/min
Step width: 0.02 degrees
Measurement range: $2\theta$ = 26 degrees to 33 degrees, 72 degrees to 76 degrees
Goniometer: radius 185 mm

The monoclinic phase ratio, $\Delta\theta(004)_t$ and $\Delta\theta(400)_t$ were calculated under these measurement conditions. The monoclinic phase ratio was calculated using the following formula from the diffraction intensity $I(11\text{-}1)_m$ at $2\theta$ = 28, the diffraction intensity $I(111)_{t,c}$ at $2\theta$ = 30.0 and the diffraction intensity $I(111)_m$ at $2\theta$ = 31.

Monoclinic phase ratio (%) = $(I(11\text{-}1)m + I(111)_m)/(I(111)_m + I(111)_{t,c} + I(111)_m)$ x 100

(BET Specific Surface Area)

The BET specific surface area of a powder sample was measured with a typical flow-type automatic specific surface area measuring apparatus (apparatus name: FlowSorb III2305, manufactured by Shimadzu Corporation) using nitrogen as an adsorption gas. The powder sample was degassed in the atmosphere at 250°C for 30 minutes as pretreatment before the measurement.

(Sintered Body Density)

The measured density of a sintered body sample was determined as the ratio (g/cm$^3$) of the mass measured by the mass measurement to the volume measured using the Archimedes' principle. According to JIS R 1634, the accurate density of a low-density sample with an open porosity of 10% or more cannot be measured, and the measurement method cannot be applied to such a sample. Thus, in the present embodiment, a low-density sample with an open porosity of 10% or more was judged to be "Unmeasurable". Before the measurement, the mass of the sintered body after drying was measured, and the sintered body was then boiled in water for one hour as pretreatment. The theoretical density (g/cm$^3$) was determined from the ratio of the unit cell mass (g) to the unit cell volume (cm$^3$) of zirconia in the sintered body on the assumption that the crystalline phase of the zirconia is entirely a tetragonal phase. The unit cell volume may be determined from a lattice constant calculated from an interplanar spacing determined using the Bragg equation from 2θ of peak tops of an XRD peak corresponding to a tetragonal (004) plane and an XRD peak corresponding to a tetragonal (220) plane in a powder X-ray diffraction pattern measured under the following conditions in a sintered body produced from the powder of the present embodiment.

(Ball Drop Test)

The impact resistance of a sintered body sample was determined in a ball drop test using a Du Pont ball drop tester according to JIS K 5600 5-3 (apparatus name: H-50, manufactured by Toyo Seiki Seisaku-Sho, Ltd.). Test conditions are as follows:

Falling weight: (shape) a cylindrical die with a spherical tip 6.35 mm in radius (mass) 300 g, that is, a rectangular parallelepiped weight with a mass of 300 g made of stainless steel 80 mm in width x 20 mm in thickness x 30 mm in height Drop height: 150 mm

Sample: a plate-like sintered body 40 mm in length x 30 mm in width x 2 mm in thickness with a surface roughness Ra $\leq$ 0.02 μm on both surfaces (surfaces 40 mm in length x 30 mm in width, main surfaces)

The sample was mounted by fixing a surface (a surface 40 mm in length x 30 mm in width) of the sample to the sample stage of the ball drop tester with a double-sided tape to prevent scattering of pieces of the sample. A tape was attached to a surface of the mounted sample opposite the fixed surface in the longitudinal direction of the surface to fix the sample). The die was placed such that the falling weight could drop near the center of the fixed sample in the ball drop test. The state of the sample after dropping the falling weight was visually checked, and the ball drop test was repeatedly performed by changing the drop height until the sample was broken. The ball drop energy at each drop height was determined using the following formula, and the ball drop energy at the drop height at which a fracture occurred was taken as the ball drop fracture energy.

$$\text{Ball drop energy (J)} = \text{mass of falling weight (g)} \times \text{drop height (mm)} \times \text{gravity --> acceleration (9.8 m/s}^2) \times 10^6$$

Fracture was judged from a sample broken into two or more pieces. A sample having extremely small broken pieces, such as chipping, but maintaining its plate-like shape was not regarded as fracture. In the case of no fracture at a specific drop height in the ball drop test, the drop height was increased from 50 mm to 500 mm in increments of 50 mm until fracture occurred in the ball drop test. In the case of no fracture even at a drop height of 500 mm, the mass of the falling weight was increased from 300 g to 500 g and from 500 g to 1 kg before the ball drop test was performed again at a drop height of 500 mm. Thus, the sample is not broken even when the ball drop energy in the test performed immediately before the test in which the fracture occurs is applied. For convenience, a sample without fracture in the ball drop test with a falling weight mass of 1 kg at a drop height of 500 mm was considered to have ball drop fracture energy of > 5 J (more than 5 J).

EXAMPLE 1

Aqueous zirconium oxychloride was subjected to hydrolysis reaction to prepare a hydrous zirconia sol. Each of magnesium chloride and cerium chloride heptahydrate was mixed with the hydrous zirconia sol at a magnesium content of 2.0% by mole and a cerium content of 5.0% by mole. After the mixing, the mixture was dried in the atmosphere and was calcined in the atmosphere at 1000°C for 2 hours to prepare a magnesium and cerium stabilized zirconia calcined powder. The calcined powder was washed with pure water, was dried and was then added to pure water to prepare a slurry, which was then ground and mixed for 24 hours in a ball mill using zirconia balls with a diameter of 2 mm as a grinding medium. The ground and mixed slurry was dried to prepare a zirconia powder of the present example composed of a magnesium and cerium stabilized zirconia with a magnesium content of 2.0% by mole and a cerium content of 5.0% by mole.

The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example composed of a magnesium and cerium stabilized zirconia with a magnesium content of 2.0% by mole and a cerium content of 5.0% by mole.

Sintering method: pressureless sintering
Sintering atmosphere: air atmosphere
Sintering temperature: 1200°C
Sintering time: 2 hours

Example 2

A zirconia sintered body of the present example was prepared in the same manner as in Example 1 except that the sintering temperature was 1150°C.

Example 3

Aqueous zirconium oxychloride was subjected to hydrolysis reaction to prepare a hydrous zirconia sol. Each of magnesium chloride and cerium chloride heptahydrate was mixed with the hydrous zirconia sol at a magnesium content of 5.0% by mole and a cerium content of 5.0% by mole. After the mixing, the mixture was dried in the atmosphere and was calcined in the atmosphere at 1000°C for 2 hours to prepare a magnesium and cerium stabilized zirconia calcined powder. The calcined powder was washed with pure water, was dried and was then added to pure water to prepare a slurry, which was then ground and mixed for 24 hours in a ball mill using zirconia balls with a diameter of 2 mm as a grinding medium. The ground and mixed slurry was dried to prepare a zirconia powder composed of a magnesium and cerium stabilized zirconia with a magnesium content of 5.0% by mole and a cerium content of 5.0% by mole.

The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example composed of a magnesium and cerium stabilized zirconia with a magnesium content of 5.0% by mole and a cerium content of 5.0% by mole.

Sintering method: pressureless sintering
Sintering atmosphere: air atmosphere
Sintering temperature: 1200°C
Sintering time: 2 hours

Example 4

A zirconia sintered body of the present example was prepared in the same manner as in Example 3 except that the sintering temperature was 1150°C.

Example 5

Aqueous zirconium oxychloride was subjected to hydrolysis reaction to prepare a hydrous zirconia sol. Each of magnesium chloride and cerium chloride heptahydrate was mixed with the hydrous zirconia sol at a magnesium content of 9.0% by mole and a cerium content of 5.0% by mole. After the mixing, the mixture was dried in the atmosphere and was calcined in the atmosphere at 1000°C for 2 hours to prepare a magnesium and cerium stabilized zirconia calcined powder. The calcined powder was washed with pure water, was dried and was then added to pure water to prepare a slurry, which was then ground and mixed for 24 hours in a ball mill using zirconia balls with a diameter of 2 mm as a grinding medium. The ground and mixed slurry was dried to prepare a zirconia powder composed of a magnesium and cerium stabilized zirconia with a magnesium content of 9.0% by mole and a cerium content of 5.0% by mole.

The powder was filled in a plate-like mold with a length of 40 mm and a width of 30 mm and was subjected to

EP 4 538 234 A1

uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example composed of a magnesium and cerium stabilized zirconia with a magnesium content of 9.0% by mole and a cerium content of 5.0% by mole.

    Sintering method: pressureless sintering
    Sintering atmosphere: air atmosphere
    Sintering temperature: 1200°C
    Sintering time: 2 hours

Example 6

$Mn_3O_4$ was added to a similar zirconia powder as in Example 3 at a $Mn_3O_4$ content of 0.4% by mass, and $GdMnO_3$ was then added to the zirconia powder at a $GdMnO_3$ content of 0.2% by mass to prepare a mixed powder. The mixed powder was added to pure water to prepare a slurry, which was ground and mixed for 24 hours in a ball mill using zirconia balls with a diameter of 2 mm as a grinding medium. The ground and mixed slurry was dried to prepare a zirconia powder of the present example containing a magnesium and cerium stabilized zirconia with a magnesium content of 5.0% by mole and a cerium content of 5.0% by mole as a matrix and having a $Mn_3O_4$ content of 0.4% by mass and a $GdMnO_3$ content of 0.2% by mass.

The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example containing a magnesium and cerium stabilized zirconia with a magnesium content of 5.0% by mole and a cerium content of 5.0% by mole as a matrix and having a $Mn_3O_4$ content of 0.4% by mass and a $GdMnO_3$ content of 0.2% by mass.

    Sintering method: pressureless sintering
    Sintering atmosphere: air atmosphere
    Sintering temperature: 1200°C
    Sintering time: 2 hours

Example 7

A zirconia sintered body of the present example was prepared in the same manner as in Example 6 except that the sintering temperature was 1150°C.

Example 8

A zirconia sintered body of the present example was prepared in the same manner as in Example 6 except that the sintering temperature was 1150°C and the sintering time was 4 hours.

Example 9

$Mn_3O_4$ was added to a similar zirconia powder as in Example 1 at a $MnsO_4$ content of 0.4% by mass, and $GdMnO_3$ was then added to the zirconia powder at a $GdMnO_3$ content of 0.2% by mass to prepare a mixed powder. The mixed powder was added to pure water to prepare a slurry, which was ground and mixed for 24 hours in a ball mill using zirconia balls with a diameter of 2 mm as a grinding medium. The ground and mixed slurry was dried to prepare a zirconia powder of the present example containing a magnesium and cerium stabilized zirconia with a magnesium content of 2.0% by mole and a cerium content of 5.0% by mole as a matrix and having a $Mn_3O_4$ content of 0.4% by mass and a $GdMnO_3$ content of 0.2% by mass.

The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example containing a magnesium and cerium stabilized zirconia with a magnesium content of 2.0% by mole and a cerium content of 5.0% by mole as a matrix and having a $Mn_3O_4$ content of 0.4% by mass and a $GdMnO_3$ content of 0.2% by mass.

    Sintering method: pressureless sintering
    Sintering atmosphere: air atmosphere
    Sintering temperature: 1200°C
    Sintering time: 2 hours

Example 10

A zirconia sintered body of the present example was prepared in the same manner as in Example 9 except that the sintering temperature was 1150°C.

Example 11

A zirconia sintered body of the present example was prepared in the same manner as in Example 9 except that the sintering temperature was 1150°C and the sintering time was 4 hours.

Example 12

$Mn_3O_4$ was added to a similar zirconia powder as in Example 1 at a $Mn_3O_4$ content of 0.4% by mass, and $GdMnO_3$ was then added to the zirconia powder at a $GdMnO_3$ content of 0.2% by mass to prepare a mixed powder. The mixed powder was added to pure water to prepare a slurry, which was ground and mixed for 24 hours in a ball mill using zirconia balls with a diameter of 2 mm as a grinding medium. The ground and mixed slurry was dried to prepare a zirconia powder of the present example containing a magnesium and cerium stabilized zirconia with a magnesium content of 7.0% by mole and a cerium content of 5.0% by mole as a matrix and having a $Mn_3O_4$ content of 0.4% by mass and a $GdMnO_3$ content of 0.2% by mass.
The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example containing a magnesium and cerium stabilized zirconia with a magnesium content of 7.0% by mole and a cerium content of 5.0% by mole as a matrix and having a $Mn_3O_4$ content of 0.4% by mass and a $GdMnO_3$ content of 0.2% by mass.

    Sintering method: pressureless sintering
    Sintering atmosphere: air atmosphere
    Sintering temperature: 1200°C
    Sintering time: 2 hours

Example 13

A zirconia sintered body of the present example was prepared in the same manner as in Example 12 except that the sintering temperature was 1150°C.

Example 14

A zirconia sintered body of the present example was prepared in the same manner as in Example 13 except that the sintering temperature was 1150°C and the sintering time was 4 hours.

Comparative Example 1

Aqueous zirconium oxychloride was subjected to hydrolysis reaction to prepare a hydrous zirconia sol. Each of magnesium chloride and cerium chloride heptahydrate was mixed with the hydrous zirconia sol at a magnesium content of 2.0% by mole and a cerium content of 9.0% by mole. After the mixing, the mixture was dried in the atmosphere and was calcined in the atmosphere at 1000°C for 2 hours to prepare a magnesium and cerium stabilized zirconia calcined powder. The calcined powder was washed with pure water, was dried and was then added to pure water to prepare a slurry, which was then ground and mixed for 24 hours in a ball mill using zirconia balls with a diameter of 2 mm as a grinding medium. The ground and mixed slurry was dried to prepare a zirconia powder composed of a magnesium and cerium stabilized zirconia with a magnesium content of 2.0% by mole and a cerium content of 9.0% by mole.

The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example composed of a magnesium and cerium stabilized zirconia with a magnesium content of 2.0% by mole and a cerium content of 9.0% by mole.

    Sintering method: pressureless sintering
    Sintering atmosphere: air atmosphere
    Sintering temperature: 1200°C
    Sintering time: 2 hours

Comparative Example 2

Aqueous zirconium oxychloride was subjected to hydrolysis reaction to prepare a hydrous zirconia sol. Each of magnesium chloride and cerium chloride heptahydrate was mixed with the hydrous zirconia sol at a magnesium content of 8.0% by mole and a cerium content of 8.0% by mole. After the mixing, the mixture was dried in the atmosphere and was calcined in the atmosphere at 1000°C for 2 hours to prepare a magnesium and cerium stabilized zirconia calcined powder. The calcined powder was washed with pure water, was dried and was then added to pure water to prepare a slurry, which was then ground and mixed for 24 hours in a ball mill using zirconia balls with a diameter of 2 mm as a grinding medium. The ground and mixed slurry was dried to prepare a zirconia powder composed of a magnesium and cerium stabilized zirconia with a magnesium content of 8.0% by mole and a cerium content of 8.0% by mole.

The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example composed of a magnesium and cerium stabilized zirconia with a magnesium content of 8.0% by mole and a cerium content of 8.0% by mole.

    Sintering method: pressureless sintering
    Sintering atmosphere: air atmosphere
    Sintering temperature: 1200°C
    Sintering time: 2 hours

Comparative Example 3

Aqueous zirconium oxychloride was subjected to hydrolysis reaction to prepare a hydrous zirconia sol. Each of magnesium chloride and cerium chloride heptahydrate was mixed with the hydrous zirconia sol at a magnesium content of 8.0% by mole and a cerium content of 2.0% by mole. After the mixing, the mixture was dried in the atmosphere and was calcined in the atmosphere at 1000°C for 2 hours to prepare a magnesium and cerium stabilized zirconia calcined powder. The calcined powder was washed with pure water, was dried and was then added to pure water to prepare a slurry, which was then ground and mixed for 24 hours in a ball mill using zirconia balls with a diameter of 2 mm as a grinding medium. The ground and mixed slurry was dried to prepare a zirconia powder composed of a magnesium and cerium stabilized zirconia with a magnesium content of 8.0% by mole and a cerium content of 2.0% by mole.

The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example composed of a magnesium and cerium stabilized zirconia with a magnesium content of 8.0% by mole and a cerium content of 2.0% by mole.

Sintering method: pressureless sintering
Sintering atmosphere: air atmosphere
Sintering temperature: 1200°C
Sintering time: 2 hours

Comparative Example 4

A zirconia sintered body of the present example was prepared in the same manner as in Comparative Example 3 except that the sintering temperature was 1150°C and the sintering time was 4 hours.

Comparative Example 5

Aqueous zirconium oxychloride was subjected to hydrolysis reaction to prepare a hydrous zirconia sol. Each of magnesium chloride and cerium chloride heptahydrate was mixed with the hydrous zirconia sol at a magnesium content of 2.0% by mole and a cerium content of 2.0% by mole. After the mixing, the mixture was dried in the atmosphere and was calcined in the atmosphere at 1000°C for 2 hours to prepare a magnesium and cerium stabilized zirconia calcined powder. The calcined powder was washed with pure water, was dried and was then added to pure water to prepare a slurry, which was then ground and mixed for 24 hours in a ball mill using zirconia balls with a diameter of 2 mm as a grinding medium. The ground and mixed slurry was dried to prepare a zirconia powder composed of a magnesium and cerium stabilized zirconia with a magnesium content of 2.0% by mole and a cerium content of 2.0% by mole.
The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a $\Phi$25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example composed of a magnesium and cerium stabilized zirconia with a magnesium content of 2.0% by mole and a cerium content of 2.0% by mole.

Sintering method: pressureless sintering
Sintering atmosphere: air atmosphere
Sintering temperature: 1200°C
Sintering time: 2 hours

Comparative Example 6

A zirconia sintered body of the present example was prepared in the same manner as in Comparative Example 5 except that the sintering temperature was 1150°C and the sintering time was 4 hours.

Comparative Example 7

$Mn_3O_4$ was added to a similar zirconia powder as in Comparative Example 1 at a $Mn_3O_4$ content of 0.4% by mass, and $GdMnO_3$ was then added to the zirconia powder at a $GdMnO_3$ content of 0.2% by mass to prepare a mixed powder. The mixed powder was added to pure water to prepare a slurry, which was ground and mixed for 24 hours in a ball mill using zirconia balls with a diameter of 2 mm as a grinding medium. The ground and mixed slurry was dried to prepare a zirconia powder of the present example containing a magnesium and cerium stabilized zirconia with a magnesium content of 2.0% by mole and a cerium content of 9.0% by mole as a matrix and having a $Mn_3O_4$ content of 0.4% by mass and a $GdMnO_3$ content of 0.2% by mass.
The powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a $\Phi$25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present example containing a magnesia and cerium stabilized zirconia with a magnesium content of 2.0% by mole and a cerium concentration of 9.0% by mole as a matrix and having a $Mn_3O_4$ content of 0.4% by mass and a $GdMnO_3$ content of 0.2% by mass.

Sintering method: pressureless sintering
Sintering atmosphere: air atmosphere

Sintering temperature: 1200°C
Sintering time: 2 hours

Comparative Example 8

A zirconia sintered body containing 9.0% by mole of magnesium as a stabilizing element (TZ-9Mg manufactured by Tosoh Corporation) was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present comparative example.

Sintering method: pressureless sintering
Sintering atmosphere: air atmosphere
Sintering temperature: 1550°C
Sintering time: 2 hours

Comparative Example 9

A zirconia sintered body of the present example was prepared in the same manner as in Comparative Example 8 except that the sintering temperature was 1200°C.

Comparative Example 10

A zirconia sintered body containing 12.0% by mole of cerium as a stabilizing element (TZ-12Ce manufactured by Tosoh Corporation) was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present comparative example.

Sintering method: pressureless sintering
Sintering atmosphere: air atmosphere
Sintering temperature: 1550°C
Sintering time: 2 hours

Comparative Example 11

A zirconia sintered body of the present example was prepared in the same manner as in Comparative Example 10 except that the sintering temperature was 1200°C.

Comparative Example 12

A zirconia sintered body containing 3.0% by mole of yttrium as a stabilizing element (TZ-3YS manufactured by Tosoh Corporation) was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The powder was also filled in a Φ25-mm cylindrical mold and was subjected to uniaxial pressing at a forming pressure of 50 MPa and cold isostatic pressing (CIP) at a forming pressure of 196 MPa to form a cylindrical green body. The green body was sintered under the following conditions to prepare a zirconia sintered body of the present comparative example.

Sintering method: pressureless sintering
Sintering atmosphere: air atmosphere
Sintering temperature: 1500°C
Sintering time: 2 hours

Comparative Example 13

A zirconia sintered body of the present example was prepared in the same manner as in Comparative Example 12 except that the sintering temperature was 1200°C.

The following table shows the evaluation results of the examples and comparative examples.

[Table 1]

| | Stabilizing element (mol%) Mg | Ce | Y | Pigment (wt%) | Sintering temperature (°C) | Sintering time (h) | Measured density (g/cm3) | M phase ratio (%) | Δθ (004)t (°) | Δθ (400)t (°) | Intensity ratio A/B | Presence or absence of cubic phase | Ball drop strength (J) | Color tone of sintered body |
|---|---|---|---|---|---|---|---|---|---|---|---|---|---|---|
| Example 1 | 2 | 5 | 0 | 0 | 1200 | 2 | 6.07 | 57.61 | -0.09 | 0.36 | 0.00 | Absent | 1.7 | Light yellow |
| Example 2 | 2 | 5 | 0 | 0 | 1150 | 2 | 6.02 | 32.03 | -0.06 | 0.38 | 0.00 | Absent | 2.5 | Light yellow |
| Example 3 | 5 | 5 | 0 | 0 | 1200 | 2 | 6.07 | 60.76 | -0.06 | 0.38 | 0.00 | Absent | 1.3 | Light yellow |
| Example 4 | 5 | 5 | 0 | 0 | 1150 | 2 | 5.90 | 40.74 | -0.06 | 0.38 | 0.00 | Absent | 1.7 | Light yellow |
| Example 5 | 9 | 5 | 0 | 0 | 1200 | 2 | 5.89 | 46.24 | -0.02 | 0.42 | 0.00 | Absent | 1.0 | Light yellow |
| Example 6 | 5 | 5 | 0 | 0.6 | 1200 | 2 | 6.11 | 0.64 | -0.05 | 0.36 | 0.00 | Absent | 2.0 | Black |
| Example 7 | 5 | 5 | 0 | 0.6 | 1150 | 2 | 6.05 | 0.00 | -0.03 | 0.38 | 0.00 | Absent | 2.5 | Black |
| Example 8 | 5 | 5 | 0 | 0.6 | 1150 | 4 | 6.09 | 4.08 | 0.03 | 0.44 | 0.00 | Absent | 3.4 | Black |
| Example 9 | 2 | 5 | 0 | 0.6 | 1200 | 2 | 6.16 | 2.86 | -0.04 | 0.38 | 0.00 | Absent | 1.5 | Black |
| Example 10 | 2 | 5 | 0 | 0.6 | 1150 | 2 | 6.13 | 0.64 | -0.05 | 0.36 | 0.00 | Absent | 2.0 | Black |
| Example 11 | 2 | 5 | 0 | 0.6 | 1150 | 4 | 6.16 | 5.93 | 0.03 | 0.46 | 0.00 | Absent | 2.0 | Black |
| Example 12 | 7 | 5 | 0 | 0.6 | 1200 | 2 | 6.07 | 0.45 | -0.05 | 0.35 | 0.00 | Absent | 1.5 | Black |
| Example 13 | 7 | 5 | 0 | 0.6 | 1150 | 2 | 6.01 | 0.64 | -0.04 | 0.36 | 0.00 | Absent | 2.2 | Black |
| Example 14 | 7 | 5 | 0 | 0.6 | 1150 | 4 | 608 | 3.52 | 0.02 | 0.44 | 0.00 | Absent | > 4.9 | Black |
| Comparative example 1 | 2 | 9 | 0 | 0 | 1200 | 2 | 6.06 | 0.00 | 0.17 | 0.51 | 0.00 | Absent | 0.3 | Light yellow |
| Comparative example 2 | 8 | 8 | 0 | 0 | 1200 | 2 | 5.95 | 0.00 | 0.12 | 0.48 | 0.00 | Absent | 0.3 | Light yellow |
| Comparative example 3 | 8 | 2 | 0 | 0 | 1200 | 2 | 5.68 | 97.84 | Unmeasurable | 0.97 | 0.00 | Absent | Unmeasurable | Light yellow |
| Comparative example 4 | 8 | 2 | 0 | 0 | 1150 | 4 | 5.69 | 97.96 | Unmeasurable | 0.98 | 0.00 | Absent | Unmeasurable | Light yellow |

(continued)

| | Stabilizing element (mol%) | | | Pigment (wt%) | Sintering temperature (°C) | Sintering time (h) | Measured density (g/cm3) | M phase ratio (%) | Δθ (004)t (°) | Δθ (400)t (°) | Intensity ratio A/B | Presence or absence of cubic phase | Ball drop strength (J) | Color tone of sintered body |
|---|---|---|---|---|---|---|---|---|---|---|---|---|---|---|
| | Mg | Ce | Y | | | | | | | | | | | |
| Comparative example 5 | 2 | 2 | 0 | 0 | 1200 | 2 | 5.79 | 98.22 | Unmeasurable | Unmeasurable | 0.00 | Absent | Unmeasurable | Light yellow |
| Comparative example 6 | 2 | 2 | 0 | 0 | 1150 | 4 | 5.80 | 98.21 | -0.05 | Unmeasurable | 0.00 | Absent | Unmeasurable | Light yellow |
| Comparative example 7 | 2 | 9 | 0 | 0.6 | 1200 | 2 | 6.12 | 0.00 | 0.14 | 0.52 | 0.00 | Absent | 0.3 | Black |
| Comparative example 8 | 9 | 0 | 0 | 0 | 1550 | 2 | 5.73 | 79.33 | Unmeasurable | Unmeasurable | 0.00 | Absent | 0.3 | White |
| Comparative example 9 | 9 | 0 | 0 | 0 | 1200 | 4 | Unmeasurable | 99.43 | Unmeasurable | Unmeasurable | 0.00 | Absent | Unmeasurable | White |
| Comparative example 10 | 0 | 12 | 0 | 0 | 1550 | 2 | 6.26 | 1.60 | 0.39 | -0.44 | 0.00 | Absent | 0.6 | Yellow |
| Comparative example 11 | 0 | 12 | 0 | 0 | 1200 | 4 | Unmeasurable | 0.00 | 0.41 | Unmeasurable | 0.00 | Absent | Unmeasurable | Yellow |
| Comparative example 12 | 0 | 0 | 3 | 0 | 1500 | 2 | 602 | 0.74 | 0.31 | 0.05 | 0.09 | Present | 0.6 | White |
| Comparative example 13 | 0 | 0 | 3 | 0 | 1200 | 4 | Unmeasurable | 99.78 | -0.18 | -0.14 | 0.00 | Absent | Unmeasurable | White |

In the item "Measured density" in the table, a low-density sample with an open porosity of 10% or more was judged to be "Unmeasurable". The item "M phase ratio" means the monoclinic phase ratio of each of the examples and comparative examples. In the items "$\Delta\theta(400)_t$" and "$\Delta\theta(004)_t$", a sample with a high monoclinic phase peak that was difficult to distinguish from a tetragonal phase peak after the shift was judged to be "Unmeasurable". In the item "Ball drop strength", a sample in which the sintered body was easily broken without performing the impact resistance evaluation by the ball drop test, such as a sample with a fissure at the time of sintering or a sample insufficiently densified and collapsed, was judged to be "Unmeasurable".

All the sintered bodies of the examples could have a measured density of 5.50 g/cm$^3$ or more and 6.30 g/cm$^3$ or less even at a low temperature of 1200°C or less. It is also shown that the monoclinic phase ratio is 70% or less, $\Delta\theta(400)_t$ is more than 0.3, and the stabilizing element is sufficiently solid-solved even at a low temperature. Furthermore, the sintered bodies had an intensity ratio A/B of less than 0.05, therefore did not contain a cubic phase and actually had higher impact resistance than those of the comparative examples in the measurement of the ball drop strength. Thus, even at a sintering temperature of 1300°C or less, densification proceeded sufficiently, and a sintered body suitable as a structural material or a decorative material and exhibiting high impact resistance could be produced. Thus, it is possible to provide at least one of a sintered body that has high sustainability and impact resistance and is suitable as a structural material or a decorative material and a method for producing the sintered body.

The present application is based on Japanese Patent Application (Japanese Patent Application No. 2022-095300) filed on June 13, 2022, which is incorporated herein by reference in its entirety. All references cited herein are incorporated in their entirety.

REFERENCE SYMBOLS

| | |
|---|---|
| 100 | external view illustrating outline of ball drop test |
| 101 | sintered body |
| 102 | die (punch) |
| 103a, 103b | guide |
| 104 | falling weight |
| 105 | fixing tape |
| 106 | sample stage of ball drop tester |
| 107 | protective tape |
| 200 | sintered body according to present embodiment after ball drop test |
| 201 | sintered body |
| 202 | impact mark (depressed portion) |
| 203 | depth of impact mark (depressed portion) |
| 300 | known sintered body after ball drop test |
| 301 | sintered body |
| 302 | defect (crack) |
| 400 | view illustrating state of installation of sintered body on sample stage of ball drop tester |
| 401 | sintered body |
| 402 | fixing tape |
| 403 | sample stage of ball drop tester |
| 404 | double-sided tape (protective tape) |
| 601 | divided sintered body |
| 602 | defect (crack) |

**Claims**

1.   A zirconia sintered body comprising 4.5% by mole or more and 15.5% by mole or less of a stabilizing element other than yttrium, wherein the stabilizing element contains 0% by mole or more and 8.5% by mole or less of cerium, a cubic phase of zirconia is not contained, and a monoclinic phase ratio is 70% or less.

2.   The zirconia sintered body according to claim 1, wherein the stabilizing element contains 2.5% by mole or more and 8.5% by mole or less of cerium.

3.   The zirconia sintered body according to claim 1 or 2, wherein in an X-ray diffraction pattern of the sintered body, an absolute $\Delta\theta(004)_t$ of a shift amount from $2\theta = 73.0$ degrees of a diffraction angle of a diffraction line corresponding to a (004) plane of a tetragonal phase of zirconia is 0.3 degrees or more, and an absolute $\Delta\theta(400)_t$ of a shift amount from $2\theta$ = 74.2 degrees of a diffraction angle of a diffraction line corresponding to a (400) plane of the tetragonal phase of zirconia is 0.1 degrees or less.

4. The zirconia sintered body according to any one of claims 1 to 3, wherein the stabilizing element further contains magnesium or calcium.

5. The zirconia sintered body according to any one of claims 1 to 4, wherein the stabilizing element contains magnesium.

6. The zirconia sintered body according to any one of claims 1 to 5, wherein the zirconia sintered body has a measured density of 5.50 g/cm$^3$ or more and 6.30 g/cm$^3$ or less.

7. The zirconia sintered body according to any one of claims 1 to 6, comprising a colorant.

8. The zirconia sintered body according to any one of claims 1 to 7, comprising at least one metal element selected from the group consisting of Cr, Mn, Fe, Co and Ni in an amount of more than 0% by weight and 5% by weight or less.

9. A zirconia powder comprising 4.5% by mole or more and 15.5% by mole or less of a stabilizing element other than yttrium, wherein the stabilizing element contains 2.5% by mole or more and 8.5% by mole or less of cerium.

10. The zirconia powder according to claim 9, wherein the zirconia powder has a sinterable temperature of 1000°C or more and less than 1300°C.

11. The zirconia powder according to claim 10, wherein the zirconia powder has a sinterable temperature of 1000°C or more and 1200°C or less.

12. A method for producing a zirconia sintered body using the powder according to any one of claims 9 to 11.

13. A member comprising the zirconia sintered body according to claim 1 or 2.

# FIG. 1

# FIG. 2

FIG. 3

FIG. 4

FIG. 5

(a)

(b)

## INTERNATIONAL SEARCH REPORT

| International application No. |
|---|
| **PCT/JP2023/021896** |

| A. | CLASSIFICATION OF SUBJECT MATTER |
|---|---|

*C01G 25/02*(2006.01)i; *C04B 35/486*(2006.01)i
FI:   C04B35/486; C01G25/02

According to International Patent Classification (IPC) or to both national classification and IPC

| B. | FIELDS SEARCHED |
|---|---|

Minimum documentation searched (classification system followed by classification symbols)

C04B35/00-C04B35/84;C01G25/00-C01G25/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 5-254933 A (TOSOH CORPORATION) 05 October 1993 (1993-10-05) paragraphs [0047], [0052] | 1-13 |
| Y | | 3, 7, 8 |
| Y | JP 2004-2147 A (TOYOTA CENTRAL RES & DEV LAB INC) 08 January 2004 (2004-01-08) paragraphs [0060]-[0061] | 3 |
| Y | JP 2007-210822 A (GC CORP) 23 August 2007 (2007-08-23) paragraph [0005] | 7, 8 |
| X | JP 8-201655 A (KYOCERA CORP) 09 August 1996 (1996-08-09) paragraphs [0018]-[0021] | 1-13 |
| Y | | 3, 7, 8 |
| Y | JP 9-150100 A (KYOCERA CORP) 10 June 1997 (1997-06-10) paragraphs [0036]-[0042] | 1-13 |

☑ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **25 July 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
| --- |
| **PCT/JP2023/021896** |

### C.    DOCUMENTS CONSIDERED TO BE RELEVANT

| Category* | Citation of document, with indication, where appropriate, of the relevant passages | Relevant to claim No. |
| --- | --- | --- |
| Y | WO 2021/237873 A1 (ANHUI MEIZHI PRECISION MANUFACTURING CO., LTD.) 02 December 2021 (2021-12-02)<br>    p. 12, lines 22-24 | 1-13 |
| A | ZHAO, Wenguan. Impedance characteristics of MgO-ZrO2 ceramics doped with CeO2. JOURNAL OF THE CHINESE RARE EARTH SOCIETY. 2006, vol. 24 no. 2, pp. 184-187<br>    table 1, fig. 1 | 1-13 |
| A | YIN, S. Low temperature sintering and mechanical properties of CeO2 and MO (M = Ca, Mg) codoped ZrO2 crystallized in supercritical methanol. British Ceramic Transactions. 1998, vol. 97 no. 2, pp. 68-73<br>    table 1 | 1-13 |

Form PCT/ISA/210 (second sheet) (January 2015)

**INTERNATIONAL SEARCH REPORT**
Information on patent family members

International application No.

**PCT/JP2023/021896**

| Patent document cited in search report | | | Publication date (day/month/year) | Patent family member(s) | | | Publication date (day/month/year) |
|---|---|---|---|---|---|---|---|
| JP | 5-254933 | A | 05 October 1993 | (Family: none) | | | |
| JP | 2004-2147 | A | 08 January 2004 | US paragraphs [0082]-[0085] | 2003/0224931 | A1 | |
| JP | 2007-210822 | A | 23 August 2007 | US paragraph [0007] | 2007/0182042 | A1 | |
| JP | 8-201655 | A | 09 August 1996 | (Family: none) | | | |
| JP | 9-150100 | A | 10 June 1997 | (Family: none) | | | |
| WO | 2021/237873 | A1 | 02 December 2021 | US paragraph [0067]<br>JP | 2022/0109338<br>2022-537655 | A1<br>A | |

Form PCT/ISA/210 (patent family annex) (January 2015)

**EP 4 538 234 A1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021091602 A
- JP 2019501855 T
- JP 2022095300 A